# NEUE EUROPÄISCHE PATENTSCHRIFT

(11) **EP 0 976 333 B2**
(45) Veröffentlichungstag und Bekanntmachung des Hinweises auf die Entscheidung über den Einspruch: **01.06.2011**
(45) Hinweis auf die Patenterteilung: 28.05.2003
(21) Anmeldenummer: 99112864.6
(22) Anmeldetag: 03.07.1999
(51) Int. Cl.: A23P 1/02, B01J 2/04, A23L 3/36

(54) **Verfahren und Vorrichtung zur Herstellung von Partikeln eines Lebensmittels**
Process and device for making food particles
Procédé et dispositif de fabrication de particules alimentaires

(30) Priorität: 29.07.1998 DE 19834064
(43) Veröffentlichungstag der Anmeldung: 02.02.2000
(73) Patentinhaber: FRANZ ZENTIS GMBH & CO., 52070 Aachen (DE)
(72) Erfinder: Becker, Jürgen, Dr., 52134 Herzogenrath (DE); Otte, Dietmar, Dipl.-Ing., 52076 Aachen (DE); Stauber, Dieter, Dr., 52134 Herzogenrath (DE)
(74) Vertreter: Bauer, Dirk

(56) Entgegenhaltungen:
- EP-A- 0 330 510
- EP-A- 0 570 119
- WO-A-95/33433
- DE-A- 2 539 460
- DE-A- 19 517 363
- DE-A- 19 750 679
- DE-C- 4 329 110
- GB-A- 2 088 274
- US-A- 4 855 157
- US-A- 4 897 111
- US-A- 5 514 307

## Beschreibung

Die Erfindung betrifft ein Verfahren zur Herstellung von Partikeln eines Lebensmittels. Die Partikel im Sinne der vorliegenden Erfindung können entweder regelmäßig geformt (z.B. kugelförmig) oder auch von unregelmäßiger Gestalt (z.B. bandförmig) sein, wobei je nach Anwendungsfall auch Größenstreuungen möglich sind. Regelmäßig geformte, ungefähr kugelförmige Teilchen mit einem Durchmesser im Bereich zwischen 1 und 10 mm, vorzugsweise ca. 2 bis 3 mm, werden in diesem Zusammenhang als Pellets bezeichnet.

Das Verfahren soll sowohl für fetthaltige auch auch für wasserhaltige Lebensmittelzusammensetzungen geeignet sein. Derartige Partikel können beispielsweise als Bestandteile von Lebensmittelmischungen (z.B. Back- oder Müslimischungen) oder als Zusätze zu Molkereiprodukten, Fruchtzubereitungen oder Speiseeis verwendet werden.

Allgemein bekannt sind Verfahren, bei denen ein bei Raumtemperatur festes Lebensmittel mittels Raspeln, Hobeln, Schneiden oder Schlagen in Partikel zerkleinert wird. Diese Verfahren sind jedoch aufwendig und die zugehörigen Vorrichtungen weisen einen hohen Wartungsbedarf auf.

Die US-A-4 855 157 beschreibt ein Verfahren, bei dem seht feinteilige fetthaltige Produkte entstehen, die durch Auskühlen flüssiger Tropfen durch kalte luft entstehen. Das Verfahren der DE-A- 197 50 679 liefert pulverförmige Mikro-kapseln, die durch Feinstversprühen oder-verdüsen von Suspensionen in einem tiefgekühlten Raum entstehen.

Aus der EP 0 615 692 B1 ist ein Verfahren und eine Vorrichtung zur Herstellung eines Kühlprodukts bekannt. Das Kühlprodukt basiert auf einem Schaum, der aus einem expandierten Produkt auf Milchbasis besteht und Schokoladenstücke enthält. Bei der Herstellung dieses bekannten Kühlprodukts wird zunächst die Schokolade sterilisiert und getrennt davon das Produkt auf Milchbasis einer UHT-Behandlung unterzogen. Letzteres wird daraufhin zur Herstellung eines Schaums expandiert, wobei gleichzeitig über eine Einspritzdüse ein Schokoladenband bzw. Schokoladenstücke im wesentlichen in die Mitte des Schaumstroms eingebracht werden. Anschließend wird die Schokolade in der Schaummasse zerschnitten und gemischt, woraufhin die Abfüllung erfolgen kann.

Mit dem bekannten Verfahren ist es jedoch nicht möglich, Schokoladenpartikel als solche zu erzeugen; vielmehr liegt als Ergebnis des Verfahrens ein Kühlprodukt vor, das eine Mischung aus einem Schaum auf Milchbasis und Schokoladenstücken darstellt.

Des weiteren sind Extrusionsverfahren zur Herstellung von Schokoladenstückchen bekannt, bei denen die vorplastifizierte Schokoladenmasse durch einen Düsenstock gepreßt und von einem vor den Düsenöffnungen rotierenden Messer zerstückelt wird. Bei diesem Verfahren ist es als nachteilig anzusehen, daß die erhaltenen Stückchen aufgrund ihrer Abtrennung von einem Strang mit Hilfe eines Messers eine scharfkantige Oberflächenkontur besitzen. Diese führt zu sensorischen Nachteilen beim Verzehr der Schokoladenstückchen. Ferner ist der Wartungsaufwand einer derartigen Extrusions- und Schneidvorrichtung groß, und die Voraussetzungen für eine sterile Produktqualität sind nur sehr schwer zu erfüllen.

Aus den DE 43 29 110 C1, DE 40 17 565 A1 und DE 37 11 169 C2 sind Verfahren zur Partikelherstellung bekannt, bei denen der Ausgangsstoff in flüssiger Form beispielsweise in flüssigen Stickstoff eingebracht wird. Auf diese Weise bilden sich Partikel mit einer sehr unregelmäßigen Oberflächenform. Neben den Strömungskräften wirken nämlich in den Partikeln enorme Eigenspannungen, die aus einer ungleichmäßigen Auskühlung in Verbindung mit der sehr großen Temperaturdifferenz zwischen dem flüssigen Lebensmittel und dem flüssigen Stickstoff resultieren.

Der Erfindung liegt die Aufgabe zugrunde, ein Verfahren zur Herstellung von Partikeln eines Lebensmittels,wobei die Partikel kugelförmig mit einem Durchmesser im Bereich von 1mm bis 10mm oder bandförmig mit einer Länge im Bereich von 5 mm bis 50 mm sind, vorzuschlagen, das zu seiner Durchführung keiner mechanischen Einwirkung auf das Lebensmittel bedarf. Des weiteren soll das Verfahren die Herstellung steriler Partikel, ausgehend von einer sterilen Ausgangsform des jeweiligen Lebensmittels, erlauben.

Das Herstellungsverfahren weist gemäß Ansprüche 1 oder 2 die folgenden Verfahrensschritte auf:
a) Das Lebensmittel wird in flüssigem Zustand vertropft.
b) Die gebildeten Tropfen fallen, der Schwerkraft folgend, um eine bestimmte Fallstrecke.
c) Während des Fallens bewegen sich die Tropfen durch ein Gas, das eine Temperatur wesentlich unterhalb des Schmelzpunkts des Lebensmittels aufweist.
d) Am Ende der Fallstrecke werden die aus den Tropfen gebildeten, zumindest teilweise ausgehärteten Partikel aufgefangen.

Mit dem erfindungsgemäßen Verfahren lassen sich sowohl regelmäßig geformte Pellets, beispielsweise in Form von Kugeln, als auch Partikel mit sehr unregelmäßiger äußerer Gestalt, wie beispielsweise unterschiedlich lange bandförmige Stücke, erzeugen. Bei einer hinreichend kleinen anfänglichen Relativgeschwindigkeit zwischen den Tropfen und dem Gas sowie keiner bzw. nur einer geringen Turbulenz in dem Gas bildet sich während des Fallens bei den Tropfen ungefähr eine Kugelform aus, die insbesondere durch die Wirkung der Oberflächenspannung zustande kommt. Aufgrund der Temperaturdifferenz zwischen dem Gas und den Tropfen kommt es zu einem Wärmeaustausch, so daß sich, ausgehend von der Oberfläche der entstehenden Kugeln, eine formstabile Hülle ausbildet. Aufgrund ihrer geringen Größe liegt ein für den Wärmetaustausch günstiges Oberflächen:Volumen-Verhältnis vor, so daß der Aushärtevorgang sehr schnell vonstatten geht. In Verbindung mit der Gleichmäßigkeit des Wärmeaustauschs führt dies zu einer hervorragenden Produktqualität, da Kälteschäden nahezu vollständig vermieden werden können. Kälteschäden treten bei der Vertropfung des Lebensmittels in einem flüssigen Medium, wie sie aus dem Stand der Technik bekannt sind, fast unvermeidlich auf, da durch ein unkontrolliertes "Einfrieren" die entstehenden Partikel aufgrund thermischer und/oder mechanischer Spannungen zerstört werden können.

Alternativ hierzu ist auch die bewußte Zerstörung der Tropfenform in einer Anfangsphase nach der Tropfenablösung möglich. Zu diesem Zweck ist für eine hinreichend große Turbulenz des Gases bzw. eine höhere Differenzgeschwindigkeit zwischen den flüssigen, fallenden Tropfen und dem Gas zu sorgen. Die Strömungskräfte führen in diesem Fall zu einer bandartigen Ausformung der Partikel, die in der Regel in sich gekrümmt sind und eine von Partikel zu Partikel variierende Länge aufweisen. Derartige Partikel ähneln von ihrer Gestalt her beispielsweise sogenannten Schokoladenraspeln, sind in der Regel jedoch länger und besitzen eine in etwa konstante Breite und Dicke.

Um eine Zerstörung der Pellets beim Auffangen am Ende der Fallstrecke zu vermeiden, ist es nicht erforderlich, daß die Pellets vollständig durchgehärtet sind. Vielmehr ist je nach Fallhöhe und Pelletdurchmesser die Ausbildung einer mehr oder weniger starken formstabilen Hülle ausreichend. Die Restaushärtung der Pellets kann in diesem Fall nach Abschluß des erfindungsgemäßen Verfahrens erfolgen. Eventuell kann auch eine plastische Verformung der Pellets bei deren Aufprall ganz bewußt angestrebt werden.

Der Grad der Aushärtung kann in Abhängigkeit vom zu verarbeitenden Lebensmittel durch die Länge der Fallstrecke und die Temperaturdifferenz zwischen dem Gas und dem Lebensmittel beeinflußt werden. Dabei kann die Gastemperatur im Verlauf der Fallstrecke durchaus verschiedene Werte annehmen. Da es bei dem erfindungsgemäßen Verfahren zu keinerlei Kontakt zwischen sich bewegenden metallischen Bauteilen kommt, läßt sich das Verfahren auch in explosionsgeschützten Bereichen anwenden.

Es versteht sich von selbst, daß das Verfahren gemäß der Erfindung sowohl kontinuierlich als auch chargenweise betrieben werden kann.

Sofern der Schmelzpunkt des Lebensmittels unterhalb der Raumtemperatur liegt (z. B. bei wasserhaltigen Lebensmitteln), ist es erforderlich, die ausgehärteten Partikel nach der Herstellung gekühlt aufzubewahren und weiterzuverarbeiten. Bei Lebensmitteln mit einem höheren Schmelzpunkt (z.B. Lebensmittel mit einem größeren Anteil höherschmelzender Fette) können die Partikel nach der Aushärtung auf Raumtemperatur gebracht werden.

Wenn das Gas innerhalb des Fallquerschnitts strömt, kann ein besserer Wärmeübergang zwischen den sich auskühlenden Tropfen und dem Gas erreicht werden. Aus energetischer Sicht ist es dabei besonders günstig, wenn das Gas innerhalb des Fallquerschnitts im Gegenstrom geführt wird.

Gemäß einer Ausgestaltung des Verfahrens wird vorgeschlagen, daß zumindest ein Teil des Gasvolumenstroms im Kreislauf geführt wird. Hierdurch kann einerseits der Energieaufwand vermindert und andererseits der Verbrauch eines eventuell teuren Gases begrenzt werden.

Als Gas zur Verwendung in dem erfindungsgemäßen Verfahren eignet sich insbesondere Stickstoff, das sich durch seine vergleichsweise kostengünstige Verfügbarkeit sowie die niedrige Verdampfungstemperatur auszeichnet. Weiterhin kommen z.B Argon und Kohlendioxid oder auch Luft - sofern der Sauerstoffanteil unkritisch ist - in Frage. Selbstverständlich können auch Mischungen der vorgenannten Gase eingesetzt werden.

Wenn die Tropfen während des Falls keine Bauteile berühren, ist die Form der erhaltenen Pellets besonders gleichmäßig und geometriegenau. In diesem Fall entsteht bei einer zur Durchführung des Verfahrens verwendeten Vorrichtung auch nahezu kein Reinigungsaufwand. Sofern lediglich unregelmäßige Partikel erzeugt werden sollen, ist die Vermeidung eines Wandkontakts nicht nötig bzw. sinnvoll.

Vorteilhafterweise ist die Temperatur des Gases auf der gesamten Fallstrecke kleiner als -40°C, wodurch aufgrund des großen Wärmeübergangs vergleichsweise geringe Fallhöhen ausreichend sind.

Bei einer Gegenstromführung des Gases liegt dessen bevorzugte Temperatur bei der Zuführung zu der Fallstrecke unterhalb von -60°C und bei der Abführung von der Fallstrecke unterhalb von -20°C.

Eine zur Durchführung des erfindungsgemäßen Verfahrens geeignete Vorrichtung zur Herstellung von Partikeln eines Lebensmittels, wobei die Partikel kugelförmig mit einem Durchmesser im Bereich von 1mm bis 10 mm oder bandförmig mit einer Länge im Bereich von 5 mm bis 50 mm sind das einen wesentlichen Anteil Fett enthält, besteht erfindungsgemäß aus einer Vertropfeinrichtung, einer Fallstrecke für die gebildeten Tropfen sowie einer Auffangeinrichtung. Mit der Vertropfeinrichtung ist das in flüssigem Zustand vorliegende Lebensmittel allein aufgrund des statischen Drucks in einem Vorratsbehälter vertropfbar. Die Tropfen fallen durch ein Gas, dessen Temperatur wesentlich unterhalb des Schmelzpunkts des Lebensmittels liegt und das durch Verdampfung des in flüssigem Zustand vorliegenden jeweiligen stoffs erzeugbar ist, wobei ein Teil des Gasvolumenstroms im Kreislauf führbar ist. Mit der Auffangeinrichtung sind die aus den Tropfen gebildeten, zumindest teilweise ausgehärteten Pellets am Ende der Fallstrecke auffangbar.

Vorteilhafterweise befindet sich die Fallstrecke innerhalb eines Fallrohres.

Wenn das Gas durch das Fallrohr strömt, läßt sich eine Verbesserung des Wärmeübergangs, d.h. verringerte Fallzeiten, d.h. auch verringerte Fallhöhen, realisieren.

Der zur Kühlung der Tropfen erforderliche Energieaufwand läßt sich vermindern, wenn das Gas im Gegenstrom zu den Tropfen durch das Fallrohr strömt.

Bei einer bevorzugten Ausführungsform ist die Strömungsgeschwindigkeit des Gases einstellbar, um sowohl regelmäßig geformte Pellets als auch unregelmäßige Partikel herstellen zu können.

Mit Hilfe einer zumindest teilweisen Kreislaufführung des Gasvolumenstroms läßt sich dessen Verbrauch erheblich vermindern, was insbesondere bei teuren Gasen wichtig ist.

Die erfindunsgemäße Vorrichtung weiter ausgestaltend, ist vorgesehen, daß ein Verdichter und mindestens ein Wärmetauscher in dem Kreislauf für das Gas vorgesehen sind. Eine Möglichkeit besteht in diesem Zusammenhang auch in einer zweistufigen Rückkühlung des Gases mit Hilfe zweier Wärmetauscher.

Wenn die Strömungsgeschwindigkeit zur Erzeugung regelmäßiger Pellets klein gewählt werden muß, ist dies vorteilhafterweise dadurch zu erzielen, daß in dem Kreislauf für das Gas eine - vorzugsweise einstellbare - Drosseleinrichtung vorgesehen ist.

Eine bevorzugte Weiterbildung der Vorrichtung gemäß der Erfindung besteht darin, daß die Vertropfeinrichtung ein Düsenstock ist, der eine Vielzahl äquidistant zueinander angeordneter Düsen aufweist. Auf diese Weise wird eine optimale Ausnutzung des Fallquerschnitts erreicht, woraus wiederum eine hohe Produktionsleistung der Vorrichtung resultiert.

Um zu verhindern, daß das flüssige Lebensmittel an der Vertropfeinrichtung insbesondere im Moment der Tropfenausbildung einfriert, was zu einer äußerst unerwünschten Unterbrechung des Herstellverfahrens führen würde, ist vorgesehen, daß die Vertropfeinrichtung beheizbar ist.

Bei einer Führung des Gases durch ein Fallrohr sind die Bereiche der Zuführung bzw. der Abführung des Gases als besonders kritisch anzusehen. Um zu vermeiden, daß es bei der Erzeugung regelmäßig geformter Pellets in diesen Bereichen zu Turbulenzen in der Gasströmung sowie übermäßigen Strömungskräften auf die noch flüssigen Tropfen kommt, wird gemäß der Erfindung weiter vorgeschlagen, daß das Gas jeweils durch Öffnungen im Fallrohr zuführbar und/oder aus diesem abführbar ist, die in der Nähe der Vertropfeinrichtung gleichmäßig über den Umfang des Fallrohrs verteilt sind. Auf diese Weise kann eine Vergleichmäßigung der Strömung in diesem sensiblen Bereich bewirkt und ein Zerreißen oder eine Verformung der Tropfen verhindert werden.

Sollen jedoch unregelmäßig geformte Partikel produziert werden, so ist eine Ausführung der Vorrichtung zu bevorzugen, bei der das Gas durch einen tangential mündenden Kanal dem Fallrohr zugeführt wird. Hierdurch wird eine Drallkomponente bei der Rohrströmung erzeugt, die zu einem Auflösen der Tropfenform und einer Erstarrung in Form etwa bandförmiger Partikel führt.

Eine einfache Möglichkeit zur Bereitstellung hinreichend kalten Gases ist darin zu sehen, daß das Gas durch Verdampfung des in flüssigem Zustand vorliegenden jeweiligen Stoffs erzeugbar ist. So läßt sich beispielsweise flüssiger Stickstoff in eine Zuleitung zu dem Fallrohr genau dosiert einspritzen.

Um die Wärmeaufnahme des Fallrohrs so gering wie möglich zu halten, woraus wiederum ein niedriger Energiebedarf der Vorrichtung resultiert, ist es vorteilhaft, das Fallrohr zu isolieren.

Schließlich besteht eine besonders vorteilhafte Art der Isolierung darin, daß das Fallrohr doppelwandig und ein zwischen zwei Wandungen eingeschlossener Zwischenraum evakuierbar ist. Der Wärmedurchgang kann hierdurch auf ein Minimum reduziert werden.

Das Verfahren gemäß der Erfindung wird nachfolgend anhand eines Ausführungsbeispiels einer erfindungsgemäßen Vorrichtung, die in der Zeichnung schematisch dargestellt ist, näher erläutert. Es zeigt:
- Fig. 1: einen Längsschnitt durch eine Vorrichtung zur Herstellung von Partikeln
- Fig. 2: eine vergrößerte Darstellung der Vertropfeinrichtung der Vorrichtung gemäß Fig. 1 in einer Draufsicht und
- Fig. 3 bis Fig. 5: jeweils ein Verfahrensschaubild für den Betrieb der Vorrichtung gemäß den Fig. und 2.

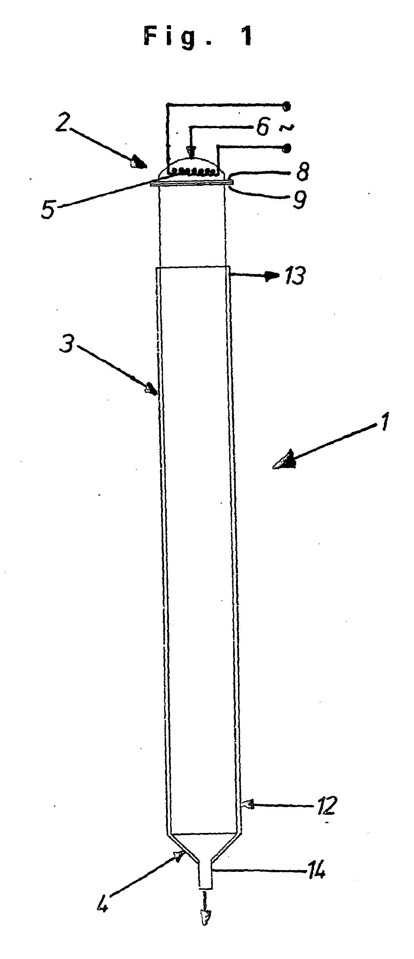

Die in Fig. 1 schematisch dargestellte Vorrichtung 1 zur Herstellung von Partikeln besteht aus einer den oberen Abschluß der Vorrichtung 1 bildenden Vertropfeinrichtung 2, einem doppelwandig ausgeführten und senkrecht ausgerichteten Fallrohr 3 sowie einer trichterförmigen Auffangeinrichtung 4. Das Fallrohr 3 besitzt einen kreisförmigen Querschnitt von ca. 1,5 m Durchmesser sowie eine Länge von insgesamt ca. 20 m.

Innerhalb der domförmigen Vertropfeinrichtung 2 befindet sich oberhalb eines in Fig. 1 nicht sichtbaren plattenförmigen Düsenstocks ein Vorrat der zu Partikeln zu verarbeitenden Flüssigkeit. Der Vorrat wird mit Hilfe einer schematisch dargestellten Heizeinrichtung 5 oberhalb der Schmelztemperatur von ca. 40°C gehalten.

Durch die Anordnung der Heizeinrichtung 5 in der Nähe der Düsen des Düsenstocks wird ein Einfrieren der Flüssigkeit beim Vertropfen in das kalte Gas sicher verhindert. Über eine durch einen Pfeil 6 angedeutete Zuführleitung wird die Flüssigkeit in die Vertropfeinrichtung 2 eingebracht.

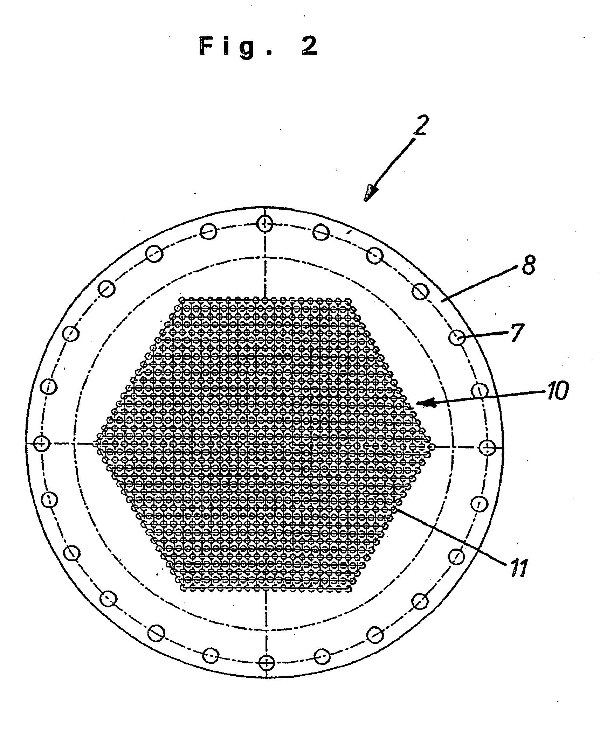

Fig. 2 zeigt eine Draufsicht auf die demontierte Vertropfeinrichtung 2, die mit einem Bohrungen 7 aufweisenden Ringflansch 8 zur Verbindung mit einem entsprechenden Ringflansch 9 des Fallrohrs 3 (Fig. 1) versehen ist. Symmetrisch zur Mittelachse des Fallrohrs 3 ausgerichtet befindet sich der als regelmäßiges Sechseck geformte Düsenstock 10. Dieser weist eine Vielzahl von äquidistant angeordneten Düsen 11 auf, durch die das flüssige Lebensmittel austritt. Der Flüssigkeitsaustritt durch die Düsen erfolgt allein aufgrund des statischen Drucks am Boden des domförmigen Vorratsbehälters.

Die in Fig. 2 nicht dargestellte Heizeinrichtung 5 besteht aus sechs identischen Heizelementen, die jeweils neben den sechs Seitenflächen der Düsenanordnung und innerhalb der Projektion des Fallquerschnitts plaziert sind.

Durch das Fallrohr 3 wird im Gegenstrom kaltes Stickstoffgas geführt, um den erforderlichen großen Wärmeübergang zwischen den Tropfen und dem Gas zu erreichen. Die Stelle, an der das Stickstoffgas dem Fallrohr 3 zugeführt wird, befindet sich an dessen unterem Ende und ist durch einen Pfeil 12 veranschaulicht. An der durch einen Pfeil 13 gekennzeichneten Stelle wird das Stickstoffgas im oberen Bereich des Fallrohrs 3 von diesem abgezogen.

Das Fallrohr 3, das aus Gründen der Handhabbarkeit und des Transports der Länge nach in mehrere Abschnitte unterteilt ist (in Fig. 1 nicht erkennbar), ist doppelwandig ausgeführt, wobei der Zwischenraum zwischen einer inneren und einer äußeren Wandung evakuiert ist. Hierdurch wird eine sehr gute Isolation des Fallrohrs 3 erzielt und die Energieverluste gering gehalten. Außerdem ist die gesamte Vorrichtung 1 druckfest ausgeführt, um diese mit Wasserdampf (p = 2,7·10⁵ Pa (2,7 bar), T = 130°C) oder Heißluft (T ≥ 184°C) sterilisieren zu können.

Wenn die Tropfen nach dem Durchfliegen der Fallstrecke in der trichterförmigen Auffangeinrichtung 4 auf deren geneigter Wandung auftreffen, hat sich bei den kugelförmigen oder unregelmäßig geformten Partikeln bereits eine hinreichend starke erhärtete Außenhülle aufgebaut, die ein Zerspringen oder eine Verformung der Partikel sicher verhindert. Die sich in der Auffangeinrichtung 4 ansammelnden Partikel stellen ein fließ- und schüttfähiges Gut dar, das durch ein Abzugsrohr 14 in einen sterilen Verpackungsbehälter geleitet wird.

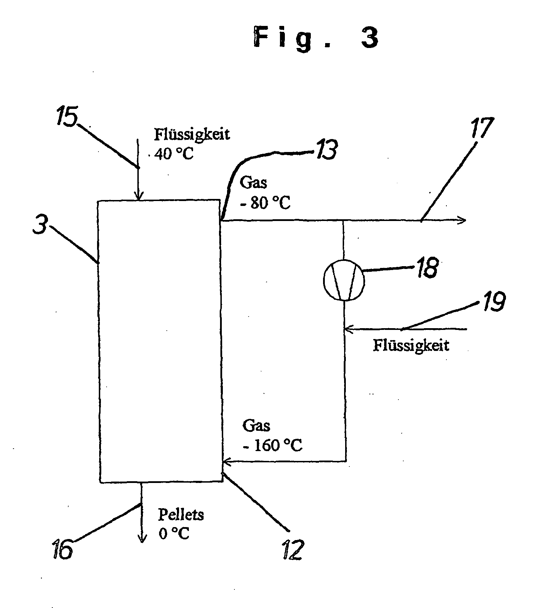

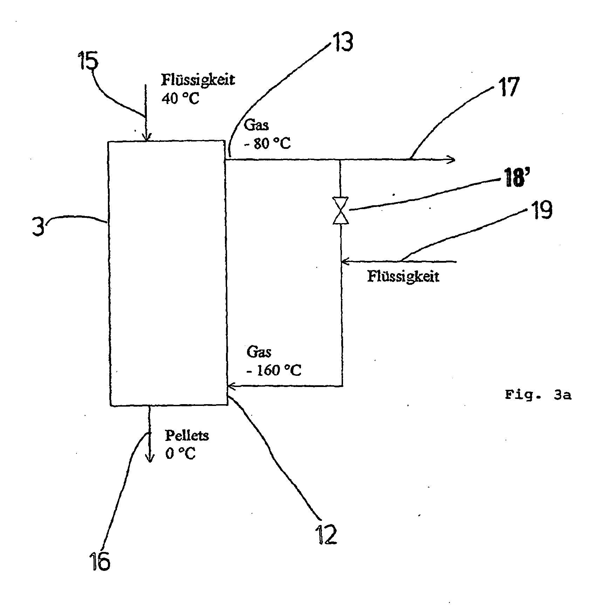

In dem in Fig. 3 gezeigten Verfahrensschaubild ist eine Verfahrensführung dargestellt, bei der das zur Kühlung der Schokoladentropfen verwendete Gas zu einem gewissen Teil im Kreislauf geführt wird. Das Fallrohr 3 ist schematisch mit Hilfe eines Rechtecks dargestellt. Mit Hilfe der Vertropfeinrichtung wird das in flüssigem Zustand vorliegende zu vertropfende Lebensmittel an der Oberseite des Fallrohrs 3 in dieses eingebracht (Pfeil 15). Die Temperatur der Flüssigkeit beträgt dabei 40°C, wobei ein sicherer Abstand zur Schmelztemperatur eingehalten wird und die Viskosität hinreichend klein ist.

Die Zufuhr des Stickstoffgases erfolgt bei einer Temperatur von -160°C an der Stelle 12, während die Abfuhr aus dem Fallrohr 3 bei einer Temperatur von -80°C an der Stelle 13 stattfindet. Aufgrund der sehr guten Isolierung des Fallrohrs 3 stammt die von dem Stickstoffgas aufgenommene Wärmemenge nahezu vollständig von den Flüssigkeitstropfen. Die in der Auffangeinrichtung am unteren Ende des Fallrohrs 3 aufgefangenen Partikel weisen eine Temperatur von 0°C auf und werden an der durch einen Pfeil 16 angedeuteten Stelle aus der Vorrichtung abgezogen.

Bei einem zu Partikeln zu verarbeitenden Massenstrom von 200 kg/h eines fett- und zuckerhaltigen Lebensmittels wird ein Stickstoffgasstrom von 400 kg/h durch das Fallrohr 3 benötigt. Die Strömungsgeschwindigkeit des Stickstoffgases liegt bei etwa 0,5 m/s, weshalb es zur Ausformung unregelmäßiger bandförmiger Partikel mit einer Länge zwischen 5 und 50 mm kommt, da die anfangs flüssigen Tropfen aufgrund der Strömungskräfte ihre Form nicht beibehalten können.

Von dem oben aus dem Fallrohr 3 abgezogenen erwärmten Stickstoffgas wird ein Teilvolumenstrom, nämlich 100 kg/h, aus der Vorrichtung abgegeben (Pfeil 17), während der andere Teilvolumenstrom von 300 kg/h über einen Verdichter 18 im Kreislauf geführt wird. Dem letztgenannten Teilvolumenstrom wird ein Volumenstrom von 100 kg/h flüssigem Stickstoff, der aus einem entsprechenden, nicht dargestellten Tank entnommen wird, zugeführt (Pfeil 19). Der flüssige Stickstoff verdampft bei -196°C und führt somit zu einem Gesamtvolumenstrom, mit einer Temperatur von -160°C, der dem Fallrohr 3 unten zugeführt wird. Der Massenstrom beträgt nach der Mischung mit dem flüssigen Stickstoff wieder die ursprünglichen 400 kg/h.

Das Verfahren gemäß dem in Fig. 3 dargestellten Schaubild zeichnet sich durch den Vorteil aus, daß der apparative Aufwand sehr gering ist, da keinerlei Wärmetauscher für die Rückkühlung des im Kreislauf geführten Teilvolumenstroms erforderlich ist.

Das in Figur 3a gezeigte Verfahrensschaubild verdeutlicht eine alternative Verfahrensweise, bei der die Strömungsgeschwindigkeit in dem Rohr auf ca. 0,15 m/s begrenzt wird. Dies erfolgt mit Hilfe einer Drosseleinrichtung 18', deren Drosselquerschnitt einstellbar ist. Ohne die Drosseleinrichtung wäre die Strömungsgeschwindigkeit in dem Fallrohr allein aufgrund der natürlichen Konvektion infolge der Gaserwärmung so stark, daß eine kritische Strömungsgeschwindigkeit überschritten würde. Oberhalb dieser kritischen Strömungsgeschwindigkeit, die bei der beschriebenen Vorrichtung bei etwa 0,4 m/s liegt, werden die anfangs flüssigen Tropfen durch die Strömungskräfte derart verformt, daß sich Partikel mit einer unregelmäßigen Gestalt ergeben. Mit Hilfe der in Figur 3a schematisch dargestellten Verfahrensweise können in etwa kugelförmige Pellets erzeugt werden, die eine enge Korngrößenverteilung aufweisen.

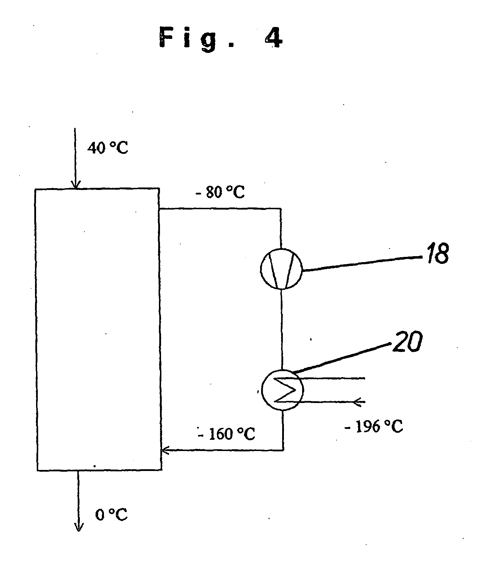

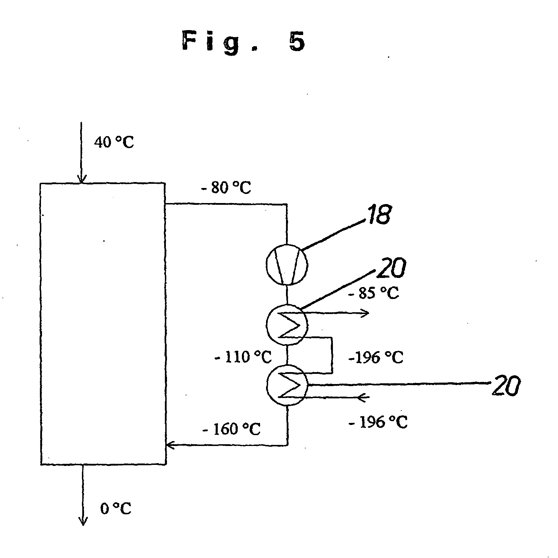

Wenn ein dauernder Gasverlust nicht tolerierbar ist, bietet sich eine Verfahrensweise gemäß den Schaubildern in den Fig. 4 und 5 an. Hierbei wird jeweils der gesamte Gasvolumenstrom im Kreislauf geführt. Innerhalb des Kreislaufs befindet sich wiederum ein Verdichter 18 und nun auch ein Wärmetauscher 20 (Fig. 4) bzw. deren zwei (Fig. 5), die in Reihe geschaltet und im Gegenstrom betrieben werden.

Als Kühlmedium kann wiederum flüssiger Stickstoff verwendet werden, dessen Siedetemperatur -196°C beträgt. Bei der zweistufigen Rückkühlung gemäß Fig. 5 beträgt die Temperatur des durch das Fallrohr 3 geleiteten Stickstoffgases zwischen den beiden Wärmetauschern 20 ca. -110°C.

Es versteht sich, daß das Verfahren nicht nur mit inerten Gasen, wie Stickstoff oder Edelgasen, durchgeführt werden kann, sondern auch mit anderen Gasen, wie beispielsweise Luft oder Kohlendioxid, sofern das zu pelletierende Lebensmittel nicht den Kontakt mit einem Inertgas erfordert.

## Patentansprüche

1. Verfahren zur Herstellung von Schokoladenpartikeln, wobei die Partikel kugelförmig mit einem Durchmesser im Bereich von 1 mm bis 10 mm sind, **gekennzeichnet durch** die folgenden Verfahrensschritte:
a) Das Lebensmittel wird in flüssigem Zustand vertropft.
b) Die gebildeten Tropfen fallen, der Schwerkraft folgend, um eine bestimmte Fallstrecke.
c) Während des Fallens bewegen sich die Tropfen **durch** ein Gas, das eine Temperatur wesentlich unterhalb des Schmelzpunkts des Lebensmittels aufweist.
d) Am Ende der Fallstrecke werden die aus den Tropfen gebildeten, zumindest teilweise ausgehärteten Partikel aufgefangen.

2. Verfahren zur Herstellung von Partikeln eines Lebensmittels, wobei die Partikel bandförmig mit einer Länge im Bereich von 5 mm bis 50 mm sind, **gekennzeichnet durch** die folgenden Verfahrensschritte:
a) Das Lebensmittel wird in flüssigem Zustand vertropft.
b) Die gebildeten Tropfen fallen, der Schwerkraft folgend, um eine bestimmte Fallstrecke.
c) Während des Fallens bewegen sich die Tropfen **durch** ein Gas, das eine Temperatur wesentlich unterhalb des Schmelzpunkts des Lebensmittels und das eine hinreichend hohe Turbulenz und/oder eine hinreichend hohe Differenzgeschwindigkeit zu den flüssigen, fallenden Tropfen aufweist.
d) Am Ende der Fallstrecke werden die aus den Tropfen gebildeten, zumindest teilweise ausgehärteten Partikel aufgefangen.

3. Verfahren nach Anspruch 1 oder 2, **dadurch gekennzeichnet, daß** das Gas innerhalb des Fallquerschnitts strömt.

4. Verfahren nach einem der Ansprüche 1 bis 3, **dadurch gekennzeichnet, daß** das Gas innerhalb des Fallquerschnitts im Gegenstrom geführt wird.

5. Verfahren nach einem der Ansprüche 1 bis 4, **dadurch gekennzeichnet, daß** zumindest ein Teil des Gasvolumenstroms im Kreislauf geführt wird.

6. Verfahren nach einem der Ansprüche 1 bis 5, **dadurch gekennzeichnet, daß** als Gas Stickstoff, Argon, Kohlendioxid und/oder Luft verwendet wird.

7. Verfahren nach einem der Ansprüche 1 bis 6, **dadurch gekennzeichnet, daß** die Tropfen während des Falls keine Bauteile berühren.

8. Verfahren nach einem der Ansprüche 1 bis 7, **dadurch gekennzeichnet, daß** die Temperatur des Gases auf der gesamten Fallstrecke kleiner als -40°C ist.

9. Verfahren nach einem der Ansprüche 4 bis 8, **dadurch gekennzeichnet, daß** die Temperatur des Gases bei der Zuführung zu der Fallstrecke kleiner als -60°C und bei der Abführung von der Fallstrecke kleiner als -20°C ist.

10. Vorrichtung zur Herstellung von Partikeln eines Lebensmittels, wobei die Partikel kugelförmig mit einem Durchmesser im Bereich von 1 mm bis 10 mm oder bandförmig mit einer Länge im Bereich von 5 mm bis 50 mm sind, bestehend aus einer Vertropfeinrichtung (2), mit der das in flüssigem Zustand vorliegende Lebensmittel allein aufgrund des statischen Drucks in einem Vorratsbehälter vertropfbar ist, einer unter der Vertropfeinrichtung (2) vorgesehenen Fallstrecke für die gebildeten Tropfen, die durch ein Gas fallen, dessen Temperatur wesentlich unterhalb des Schmelzpunkts des Lebensmittels liegt und das durch Verdampfung des in flüssigem Zustand vorliegenden jeweiligen Stoffs erzeugbar ist, wobei ein Teil des Gasvolumenstroms im Kreislauf führbar ist, sowie einer Auffangeinrichtung (4), mit der die aus den Tropfen gebildeten, zumindest teilweise ausgehärteten Partikel am Ende der Fallstrecke auffangbar sind.

11. Vorrichtung nach Anspruch 10, **dadurch gekennzeichnet, daß** sich die Fallstrecke innerhalb eines Fallrohrs (3) befindet.

12. Vorrichtung nach Anspruch 11, **dadurch gekennzeichnet, daß** das Gas im Gegenstrom zu den Tropfen durch das Fallrohr (3) strömt.

13. Vorrichtung nach Anspruch 11 oder 12, **dadurch gekennzeichnet, daß** die Strömungsgeschwindigkeit des Gases einstellbar ist.

14. Vorrichtung nach einem der Ansprüche 10 bis 13, **dadurch gekennzeichnet, daß** ein Verdichter (18) und mindestens ein Wärmetauscher (20) in dem Kreislauf für das Gas vorgesehen sind.

15. Vorrichtung nach Anspruch 14, **dadurch gekennzeichnet, daß** eine Drosseleinrichtung (18') für das im Kreislauf geführte Gas vorgesehen ist.

16. Vorrichtung nach einem der Ansprüche 10 bis 15, **dadurch gekennzeichnet, daß** die Vertropfeinrichtung (2) ein Düsenstock (10) ist, der eine Vielzahl äquidistant zueinander angeordneter Düsen (11) aufweist:

17. Vorrichtung nach einem der Ansprüche 10 bis 16, **dadurch gekennzeichnet, daß** die Vertropfeinrichtung (2) beheizbar ist.

18. Vorrichtung nach einem der Ansprüche 11 bis 17, **dadurch gekennzeichnet, daß** das Gas jeweils durch Öffnungen dem Fallrohr (3) zuführbar und/oder aus diesem abführbar ist, die in der Nähe der Vertropfeinrichtung (2) gleichmäßig über den Umfang des Fallrohrs (3) verteilt sind.

19. Vorrichtung nach einem der Ansprüche 11 bis 18, **dadurch gekennzeichnet, daß** das Gas durch einen tangential mündenden Anal dem Fallrohr zuführbar ist.

20. Vorrichtung nach einem der Ansprüche 11 bis 19, **dadurch gekennzeichnet, daß** das Fallrohr (3) isoliert ist.

21. Vorrichtung nach Anspruch 20, **dadurch gekennzeichnet, daß** das Fallrohr (3) doppelwandig und ein zwischen zwei Wandungen eingeschlossener Zwischenraum evakuierbar ist.

## Claims

1. Procedure for manufacturing pellets of a foodstuff, in which the pellets are spherical and have a diameter in the range of 1 mm to 10 mm, **characterised by** the following process
a) The foodstuff is turned into drops in liquid form
b) The formed drops fall over a certain descent path following the force of gravity
c) During falling, the drops pass through a gas, which has a temperature substantially below the foodstuff's melting point.
d) At the end of the descent path, the pellets formed from the drops, which are at least partly hardened, are collected.

2. Procedure for manufacturing pellets of a foodstuff, in which the pellets are ribbon-shaped with a length in the range of 5 mm to 50 mm, **characterised by** the following process
a) The foodstuff is turned into drops in liquid form
b) The formed drops fall over a certain descent path following the force of gravity
c) During falling, the drops pass through a gas, which has a temperature substantially below the foodstuff's melting point as well as a sufficiently high turbulence intensity and/or a sufficiently high relative velocity to the falling liquid drops.
d) At the end of the descent path, the pellets formed from the drops, which are at least partly hardened, are collected.

3. Process in accordance with claims 1 and 2, **characterised in that** the gas is flowing within the descent section.

4. Process in accordance with claim 3, **characterised in that** the gas within the descent section is fed in reverse flow.

5. Process in accordance with one of the claims 1 to 4, **characterised in that** at least a part of the gas volume flow is fed in a circuit.

6. Process in accordance with one of the claims 1 to 5, **characterised in that** nitrogen, argon, carbon dioxide and/or air is used as the gas.

7. Process in accordance with one of the claims 1 to 6, **characterised in that** during the descent the drops do not come into contact with any component parts.

8. Process in accordance with one of the claims 1 to 7, **characterised in that** the temperature of the gas is lower than - 40°C over the entire path

9. Process in accordance with one of the claims 4 to 8, **characterised in that** the temperature of the gas when being fed to the descent section is lower that -60°C and lower than -20°C when discharged from the descent section.

10. Equipment for the manufacture of pellets of a foodstuff, in which the pellets are spherical and have a diameter in the range of 1 mm to 10 mm or ribbon-shaped with a length in the range of 5mm to 50 mm, consisting of a dropper unit (2), with which the foodstuff which is present in liquid form can be dripped into a storage container solely on the basis of static pressure, a descent section provided beneath the dropper unit (2) for the drops formed, which fall through a gas whose temperature is substantially below the melting point of the foodstuff and which can be produced by evaporating of the respective substance present in liquid form, in the course of which part of the gas volume flow can be fed through a circuit, as well as a collecting unit (4), with which the pellets - which are at least partly hardened - formed from the drops can be collected at the end of the descent section.

11. Equipment in accordance with claim 10, **characterised in that** the drop section is situated within a downpipe (3).

12. Equipment in accordance with claim 11, **characterised in that** the gas flows through the downpipe (3) in reverse to the drops.

13. Equipment in accordance with claim 11 or 12, **characterised in that** the flow speed of the gas can be regulated.

14. Equipment in accordance with one of the claims 10 to 13, **characterised in that** a condenser (18) and at least one heat exchanger (20) are provided in the circuit for the gas.

15. Equipment in accordance with claim 14, **characterised in that** a throttle device (18') is provided for the gas fed thorough the circuit.

16. Equipment in accordance with one of the claims 10 to 15, **characterised in that** the dropper unit (2) is a nozzle block (10), which has a multitude of equidistantly spaced nozzles (11).

17. Equipment in accordance with one of the claims 10 to 16, **characterised in that** the dropper unit (2) can be heated.

18. Equipment in accordance with one of the claims 11 to 17, **characterised in that** in each instance the gas can be supplied to the downpipe (3) and/or be removed therefrom through apertures that are evenly distributed around the circumference of the downpipe (3) near the dropper unit (2).

19. Equipment in accordance with one of the claims 11 to 18, **characterised in that** the gas can be fed to the downpipe (3) via a duct which has a tangential aperture.

20. Equipment in accordance with one of the claims 11 to 19, **characterised in that** the downpipe (3) is insulated.

21. Equipment in accordance with claim 20, **characterised in that** the downpipe (3) has double walls and can be evacuated into an intermediate area encased between two partitions.

## Revendications

1. Procédé de production de particules de chocolat, les particules étant sous la forme de sphères d'un diamètre de l'ordre de 1 mm à 10 mm, **caractérisé en ce que**
a) On fait s'égoutter la denrée alimentaire à l'état liquide.
b) On fait tomber les gouttes, sous l'effet de la force de gravité, sur une section de chute déterminée.
c) Pendant la chute, les gouttes se déplacent dans un gaz, qui a une température sensiblement inférieure au point de fusion de la denrée alimentaire.
d) A la fin de la section de chute, on recueille les particules formées à partir des gouttes et durcies au moins en partie.

2. Procédé de production de particules d'une denrée alimentaire, les particules étant sous la forme d'une bande d'une longueur de l'ordre de 5 mm à 50 mm, **caractérisé en ce que**
a) On fait s'égoutter la denrée alimentaire à l'état liquide.
b) On fait tomber les gouttes, sous l'effet de la force de gravité, sur une section de chute déterminée.
c) Pendant la chute, les gouttes se déplacent dans un gaz, qui a une température sensiblement inférieure au point de fusion de la denrée alimentaire et qui a une turbulence sensiblement élevée par rapport les gouttes liquide, qui tombent et/ou la différence entre la vélocité du gaz et la vélocité des gouttes est sensiblement élevée.
d) A la fin de la section de chute, on recueille les particules formées à partir des gouttes et durcies au moins en partie.

3. Procédé suivant la revendication 1 ou 2, **caractérisé en ce que** le gaz passe dans la section transversale de chute.

4. Procédé suivant la revendication 1 à 3, **caractérisé en ce que** le gaz passe à contre-courant dans la section transversale de chute.

5. Procédé suivant la revendication 1 à 4, **caractérisé en ce que** l'on fait passer en circuit fermé au moins une partie du courant de gaz en volume.

6. Procédé suivant la revendication 1 à 5, **caractérisé en ce que** l'on utilise comme gaz de l'azote, de l'argon, du dioxyde de carbone et/ou de l'air.

7. Procédé suivant la revendication 1 à 6, **caractérisé en ce que** pendant la chute, les gouttes ne touchent pas d'élément.

8. Procédé suivant la revendication 1 à 7, **caractérisé en ce que** la température du gaz sur toute la section de chute est inférieure à -40°C.

9. Procédé suivant la revendication 4 à 8, **caractérisé en ce que** la température du gaz lorsqu'il est apporté à la section de chute est inférieure à -60°C et lorsqu'il est évacué de la section de chute est inférieure à -20°C.

10. Dispositif de production de particules d'une denrée alimentaire, les particules étant sous la forme de sphères d'un diamètre de l'ordre de 1 mm à 10 mm ou sous la forme d'une bande d'une longueur de l'ordre de 5 mm à 50 mm, constitué d'un dispositif (2) de formation de gouttes par lequel la denrée alimentaire se présentant à l'état liquide peut être mise sous forme de gouttes seulement en raison de la pression statique dans un réservoir, d'une section de chute prévue sous le dispositif (2) de formation de gouttes et dans laquelle les gouttes tombent dans un gaz dont la température est sensiblement inférieure au point de fusion de la denrée alimentaire et qui peut être produit par évaporation de la matière respective se présentant à l'état liquide, une partie du courant de gaz en volume pouvant être mise en circulation en circuit fermé, ainsi que d'un dispositif (4) de collecte par lequel les particules formées à partir des gouttes et durcies au moins en partie peuvent être recueillies à la fin de la section de chute.

11. Dispositif suivant la revendication 10, **caractérisé en ce que** la section de chute se trouve à l'intérieur d'un tuyau (3) de descente.

12. Dispositif suivant la revendication 11, **caractérisé en ce que** le gaz passe dans le tuyau (3) de descente à contre-courant des gouttes.

13. Dispositif suivant la revendication 11 ou 12, **caractérisé en ce que** la vitesse d'écoulement du gaz est réglable.

14. Dispositif suivant l'une des revendications 10 à 13, **caractérisé en ce qu'**il est prévu un condenseur (18) et au moins un échangeur de chaleur (20) dans le circuit du gaz.

15. Dispositif suivant la revendication 14, **caractérisé en ce qu'**il es prévu un dispositif (18') d'étranglement pour le gaz qui passe en circuit fermé.

16. Dispositif suivant l'une des revendications 10 à 15, **caractérisé en ce que** le dispositif (2) de formation de gouttes est un porte-buse (10) qui a une pluralité de buses (11) équidistantes.

17. Dispositif suivant l'une des revendications 10 à 16, **caractérisé en ce que** le dispositif (2) de formation de gouttes peut être chauffé.

18. Dispositif suivant l'une des revendications 11 à 17, **caractérisé en ce que** le gaz peut être apporté au tuyau (3) de chute et/ou en être évacué par des ouvertures qui sont réparties de manière uniforme à proximité du dispositif (2) de formation de gouttes sur le pourtour du tuyau (3) de chute.

19. Dispositif suivant l'une des revendications 11 à 18, **caractérisé en ce que** le gaz peut être apporté au tuyau de chute par un canal débouchant tangentiellement.

20. Dispositif suivant l'une des revendications 11 à 19, **caractérisé en ce que** le tuyau (3) de chute est isolé.

21. Dispositif suivant la revendication 20, **caractérisé en ce que** le tuyau (3) de chute est à double paroi et un espace intermédiaire inclus entre deux parois peut être mis sous vide.
